# EUROPEAN PATENT APPLICATION

(11) **EP 4 571 869 A1**
(43) Date of publication of application: **18.06.2025**
(21) Application number: 24767393.2
(22) Date of filing: 06.03.2024
(51) Int. Cl.: H01M 4/04, F26B 3/30, F21V 33/00, F21V 7/06, H05B 3/00

(54) **DEVICE FOR DRYING ELECTRODES**

(30) Priority: 07.03.2023 KR 20230029869
(71) Applicant: LG Energy Solution, Ltd., Seoul 07335 (KR)
(72) Inventor: KIM, Ji Sung, Daejeon 34122 (KR)
(74) Representative: Plasseraud IP
(86) International application number: PCT/KR2024/002828
(87) International publication number: WO 2024/186105

(57) **Abstract**

Provided is an electrode drying apparatus according to example embodiments. The electrode drying apparatus includes a plurality of light emitting devices arranged along a moving direction of an electrode that includes electrode plates and active materials, in which each of the plurality of light emitting devices includes a light source configured to generate light in an infrared band and a reflector configured to reflect the light generated from the light source, and a reflective surface of the reflector is a parabolic surface.

## Description

### [Technical Field]

The present invention relates to an electrode drying apparatus. The present application claims the benefit of priority based on Korean Patent Application No. 10-2023-0029869, filed on March 7, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, owing to improved energy density and economies of scale, manufacturing costs of electric-powered hybrid electric vehicles (HEVs) and battery electric vehicles (BEVs) have dramatically decreased and a range of BEVs has increased to the same level as that of fuel vehicles, and thus, a main use of secondary batteries is moving from mobile devices to mobility.

An electrode drying process is a process of removing moisture from sheet type positive and negative electrode plates after an active material is applied thereto, before the positive and negative electrode plates are separated from each other. The yield and reliability of a secondary battery can be improved by uniformly drying all surfaces of electrode sheets.

### [Disclosure]

### [Technical Problem]

The present invention is directed to providing an electrode drying system with improved reliability.

### [Technical Solution]

Embodiments of the present invention provide an electrode drying apparatus. The electrode drying apparatus includes a plurality of light emitting devices arranged along a moving direction of an electrode that includes electrode plates and active materials, in which each of the plurality of light emitting devices includes a light source configured to generate light in an infrared band and a reflector configured to reflect the light generated from the light source, and a reflective surface of the reflector is a parabolic surface.

Each of the plurality of light emitting devices nay be configured to emit parallel light.

The light source may be on a focal point on the parabolic surface.

Example embodiments provide an electrode drying apparatus including first and second light emitting devices arranged alternately along a moving direction of an electrode that includes electrode plates and active materials. The first light emitting device may include a first light source configured to generate first light in an infrared band and a first reflector configured to reflect the first light generated from the first light source, and the second light emitting device may include a second light source configured to generate second light in an infrared band and a second reflector configured to reflect the second light generated from the second light source. A first reflective surface of the first reflector may be different from a second reflective surface of the second reflector.

The first reflective surface may be a parabolic surface.

The second reflective surface may be a parabolic surface.

A first focal length of the first reflective surface may be less than a second focal length of the second reflective surface.

The first light source may be on a focal point on the first reflective surface.

The second light source may be on a focal point on the second reflective surface.

The first light emitting device may be configured to emit parallel light.

The second light emitting device may be configured to emit non-parallel light.

The second light emitting device may include a third reflector configured to reflect the second light reflected by the second reflector.

A third reflective surface of the third reflector may be a parabolic surface.

The second light source may be on a focal point on the second reflective surface.

Example embodiments provide an electrode drying apparatus including first and second light emitting devices arranged alternately along a moving direction of an electrode that includes electrode plates and active materials.

The first light emitting device may include a first light source configured to generate first light in an infrared band, and a first reflector configured to reflect the first light generated from the first light source.

The second light emitting device may include a second light source configured to generate second light in an infrared band, and a second reflector configured to reflect the second light generated from the second light source.

The first light emitting device may be configured to emit parallel light, and the second light emitting device may be configured to emit non-parallel light.

The first reflector may include a first reflective surface that is a parabolic surface.

The second reflector may include a second reflective surface that is a parabolic surface.
the first light source is spaced apart from a focal point on the first reflective surface.

The second light source may be on a focal point on the second reflective surface.

### [Advantageous Effects]

According to example embodiments of the present invention, infrared rays can be emitted to an electrode using a reflector with a parabolic reflective surface. Accordingly, electrode drying uniformity can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a diagram for describing an electrode drying apparatus according to example embodiments.
FIG. 2 is a drawing illustrating a light emitting device of FIG. 1.
FIG. 3 is a diagram for describing a light emitting device according to other example embodiments.
FIG. 4 is a diagram for describing a light emitting device according to other example embodiments.
FIG. 5 is a diagram for describing a light emitting device according to other example embodiments.
FIG. 6 is a diagram for describing a light emitting device according to other example embodiments.
FIG. 7 is a diagram for describing an electrode drying apparatus according to example embodiments.
FIG. 8 is a diagram for describing an electrode drying apparatus according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

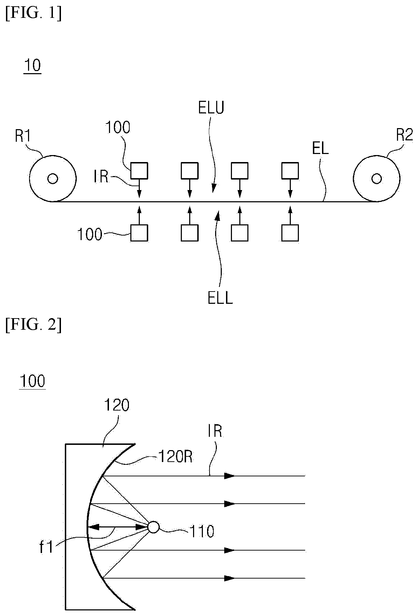

FIG. 1 is a diagram for describing an electrode drying apparatus 10 according to example embodiments.

FIG. 2 is a drawing illustrating a light emitting device 100 of FIG. 1.

Referring to FIGS. 1 and 2, the electrode drying apparatus 10 may include a plurality of light emitting devices 100. The electrode drying apparatus 10 may be configured to perform a drying process on an electrode EL. Here, the drying process is a process of emitting light IR in an infrared band to an upper surface ELU and a lower surface ELL of the electrode EL to remove moisture from the electrode EL. The electrode drying apparatus 10 may perform a roll-to-roll drying process. The electrode EL unwound from a first roll R1 may be dried by the Electrode drying apparatus 10 and be thereafter wound around a second roll R2.

The electrode EL may be used to manufacture a secondary battery. The electrode EL may be a positive electrode or a negative electrode. The positive electrode includes a positive electrode plate and a positive electrode active material applied on the positive electrode plate, and the negative electrode includes a negative electrode plate and a negative electrode active material applied on the negative electrode plate.

Here, the electrode EL may be a positive electrode or negative electrode of a secondary battery. The positive electrode includes a positive electrode plate and a 'positive electrode active material applied on the positive electrode plate. The negative electrode includes a negative electrode plate and a negative electrode active material applied on the negative electrode plate.

A thickness of the positive electrode plate may range from about 3 µm to about 500 µm. The positive electrode plate may not cause a chemical change in a finally manufactured secondary battery and may have high conductivity. The positive electrode plate may include, for example, stainless steel, nickel, titanium, baked carbon, and aluminum. The positive electrode plate may include stainless steel surface-treated with carbon, nickel, titanium, silver, or the like. A surface of the positive electrode plate may include a fine uneven structure to increase the adhesion of the active material. The positive electrode plate may be in the form of film, sheet, foil, net, porosity, foam, nonwoven fabric or the like.

A thickness of the negative electrode plate may be in a range of about 3 µm to about 500 µm. The negative electrode plate may not cause a chemical change in a finally manufactured secondary battery and may have high conductivity. The negative electrode plate may include copper, stainless steel, aluminum, nickel, titanium, baked carbon, and aluminum-cadmium alloy. The negative electrode plate may include stainless steel surface-treated with carbon, nickel, titanium, silver, or the like. A surface of the negative electrode plate may include a fine uneven structure to increase the adhesion of the active material. The negative electrode plate may be in the form of film, sheet, foil, net, porosity, foam, nonwoven fabric or the like.

The positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{d}Mn_{c}Co_{1-(b+c+d)}M_{d}O₍₂₋ₑ₎A, e.g., Li_{1+z}Ni_{1/3}Co_{1/3}Mn_{1/3}O₂ or Li_{1+zN}i_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

For example, the negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, and tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

Each of the plurality of light emitting devices 100 may be configured to emit light IR in the infrared band to the electrode EL. A wavelength of the light IR generated by the plurality of light emitting devices 100 may range from about 0.78 µm to about 2.5 µm. Some of the plurality of light emitting devices 100 may be on the electrode EL and emit light IR to the upper surface ELU of the electrode EL. Some of the plurality of light emitting devices 100 may be under the electrode EL and emit light IR to the lower surface EL of the electrode EL.

According to example embodiments, the light IR emitted from the plurality of light emitting devices 100 may be collimated. Accordingly, the light IR may be parallel light and improve uniformity in drying the electrode EL.

According to example embodiments, each of the plurality of light emitting devices 100 may include a light source 110 and a reflector 120. The light source 110 may be configured to generate light IR in an infrared band. The reflector 120 may include a reflective surface 120R with a high reflectivity and a low absorption rate with respect to the light IR. For example, a reflectivity of the reflective surface 120R with respect to incident light IR may be about 95% or more. As another example, the reflectivity of the reflective surface 120R with respect to incident light IR may be about 99% or more. As another example, the reflectivity of the reflective surface 120R with respect to incident light IR may be about 99.9% or more.

According to example embodiments, the reflective surface 120R may be a parabolic surface. According to example embodiments, the light source 110 may be on a focal point on the reflective surface 120R. Accordingly, the light IR generated from the light source 110 and reflected from the reflective surface 120R may be substantially parallel to an optical axis of the reflective surface 120R. Here, the optical axis is a rotation symmetry axis of an optical system and may be a straight line connecting centers of symmetry of refractive or reflective surfaces. That is, the light IR generated from the light source 110 and reflected from the reflective surface 120R may be parallel light.

### (Second Embodiment)

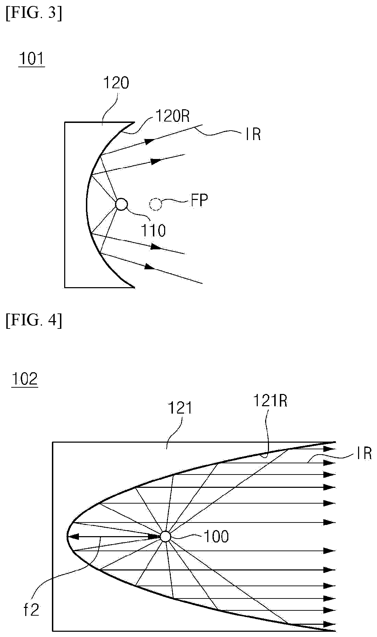

FIG. 3 is a diagram for describing a light emitting device 101 according to other example embodiments. The light emitting device 101 of FIG. 3 may replace the light emitting device 100 of FIG. 2 in the electrode drying apparatus 10.

Referring to FIG. 3, according to example embodiments, the light emitting device 101 may include a light source 110 and a reflector 120. The light source 110 and the reflector 120 are substantially the same as those described above with reference to FIGS. 1 and 2.

The light source 110 may not be on a focal point FP. According to example embodiments, the light source 110 may be spaced apart from the focal point FP on a reflective surface 120R. According to example embodiments, the light source 110 may be closer to the reflective surface 120R than the focal point FP. Accordingly, the light IR generated from the light source 110 and reflected from the reflective surface 120R may be oblique to an optical axis of the reflective surface 120R. That is, the light IR generated from the light source 110 and reflected from the reflective surface 120R may be non-parallel light. The light IR generated from the light source 110 and reflected from the reflective surface 120R may be divergent light.

According to example embodiments, the light emitting device 101 emits divergent light and thus an area of a portion of the electrode EL covered by the light IR emitted by the light emitting device 101 increases. Accordingly, the number of light emitting devices 101 required to perform the drying process may decrease.

### (Third Embodiment)

FIG. 4 is a diagram for describing a light emitting device 102 according to other example embodiments. The light emitting device 102 of FIG. 4 may replace the light emitting device 100 of FIG. 2 in the electrode drying apparatus 10.

Referring to FIG. 4, according to example embodiments, the light emitting device 102 may include a light source 110 and a reflector 121. The light source 110 is substantially the same as that described above with reference to FIGS. 1 and 2.

The reflector 122 may include a reflective surface 121R with a high reflectivity and a low absorption rate with respect to light IR. For example, a reflectivity of the reflective surface 121R with respect to incident light IR may be about 95% or more. As another example, the reflectivity of the reflective surface 121R with respect to incident light IR may be about 99% or more. As another example, the reflectivity of the reflective surface 121R with respect to incident light IR may be about 99.9% or more.

According to example embodiments, the reflective surface 121R may be a parabolic surface. According to example embodiments, the light source 110 may be on a focal point on the reflective surface 121R. Accordingly, the light IR generated from the light source 110 and reflected from the reflective surface 121R may be substantially parallel to an optical axis of the reflective surface 121R.

Referring to FIGS. 2 and 4, a focal length f2 of the reflective surface 121R may be greater than the focal length f1 of the reflective surface 120R. Accordingly, a larger part of the light IR generated from the light source 110 may be parallel light, and energy efficiency of the light emitting device 102 emitting light may be improved. In addition, because a cross-sectional area of the light IR emitted from the light emitting device 102 decreases, a temperature of the electrode EL (see FIG. 1) may increase at a higher rate than when the light emitting device 100 of FIG. 2 is used, and the efficiency of the drying process may improve.

### (Fourth Embodiment)

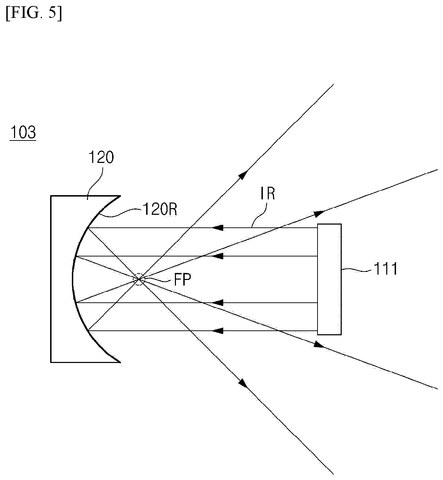

FIG. 5 is a diagram for describing a light emitting device 103 according to other example embodiments. The light emitting device 103 of FIG. 5 may replace the light emitting device 100 of FIG. 2 in the electrode drying apparatus 10.

Referring to FIG. 5, according to example embodiments, the light emitting device 103 may include a light source 111 and a reflector 120. The reflector 120 is substantially the same as that described above with reference to FIGS. 1 and 2.

According to example embodiments, the light source 111 may be a surface light source. Light IR generated from the light source 111 may be collimated. According to example embodiments, the light source 111 may include a beamformer for forming a cross section of the light IR.

The light source 111 may not be on a focal point FP. According to example embodiments, the light source 111 may be spaced apart from the focal point FP on a reflective surface 120R. According to example embodiments, the light source 111 may be more distant from the reflective surface 120R than the focal point FP on the reflective surface 120R. According to embodiments, the light source 111 may be spaced apart from the reflective surface 120R with the focal point FP on the reflective surface 120R interposed therebetween. Accordingly, interference between the light source 111 and the light IR reflected from the reflective surface 120R may be prevented.

According to example embodiments, the light IR generated from the light source 111 and reflected from the reflective surface 120R may be oblique to an optical axis of the reflective surface 120R. That is, the light IR generated from the light source 111 and reflected from the reflective surface 120R may be non-parallel light. The light IR generated from the light source 111 and reflected from the reflective surface 120R may be divergent light.

According to example embodiments, the light emitting device 103 emits divergent light and thus an area of a portion of an electrode to be covered increases. Accordingly, an electrode drying process can be performed using a relatively small number of light emitting devices 103.

### (Fifth Embodiment)

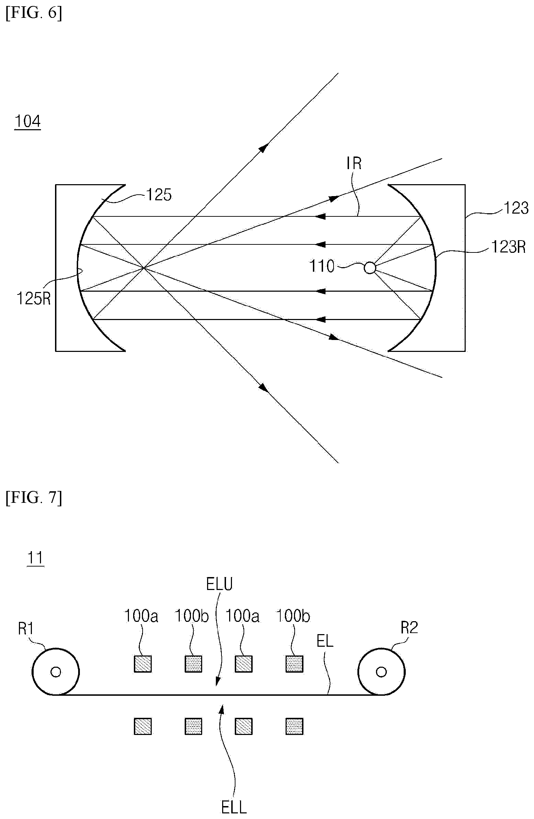

FIG. 6 is a diagram for describing a light emitting device 104 according to other example embodiments. The light emitting device 104 of FIG. 6 may replace the light emitting device 100 of FIG. 2 in the electrode drying apparatus 10.

Referring to FIG. 6, according to example embodiments, the light emitting device 104 may include a light source 110, a first reflector 123, and a second reflector 125. The light source 110 is substantially the same as that described above with reference to FIGS. 1 and 2. The first reflector 123 and the second reflector 125 are substantially the same as the reflector 120 described above with reference to FIGS. 1 and 2. That is, the first reflector 123 may include a first reflective surface 123R that is a parabolic surface, and the second reflector 125 may include a second reflective surface 125R that is a parabolic surface.

According to embodiments, the light source 110 may be on a focal point on the first reflective surface 123R of the first reflector 123. Accordingly, the light IR generated from the light source 110 may be reflected and collimated by the first reflector 123. The light IR collimated by the first reflector 123 may be reflected by the second reflector 125. The light IR reflected by the second reflector 125 may be non-parallel light. The light IR reflected by the second reflector 125 may be divergent light.

According to example embodiments, the light emitting device 104 emits divergent light and thus an area of a portion of an electrode to be covered increases. Accordingly, the number of light emitting devices 104 required to perform the drying process may decrease.

### (Sixth Embodiment)

FIG. 7 is a diagram for describing an electrode drying apparatus 11 according to example embodiments.

Referring to FIG. 7, the electrode drying apparatus 11 may be configured to perform a drying process of an electrode EL. The electrode drying apparatus 11 may include first light emitting devices 100a and second light emitting devices 100b. According to example embodiments, the first light emitting devices 100a and the second light emitting devices 100b may be alternately disposed. Accordingly, the second light emitting devices 100b may be interposed between the first light emitting devices 100a, and the first light emitting devices 100a may be interposed between the second light emitting devices 100b.

According to example embodiments, the first light emitting devices 100a may be different from the second light emitting devices 100b. Each of the first light emitting devices 100a may be one of the light emitting devices 100, 101, 102, 103, and 104 of FIGS. 2 to 6, and each of the second light emitting devices 100b may be another of the light emitting devices 100, 101, 102, 103, and 104 of FIGS. 2 to 6. For example, each of the first light emitting devices 100a may be the light emitting device 100 of FIG. 2, and each of the second light emitting devices 100b may be the light emitting device 101 of FIG. 3.

### (Seventh Embodiment)

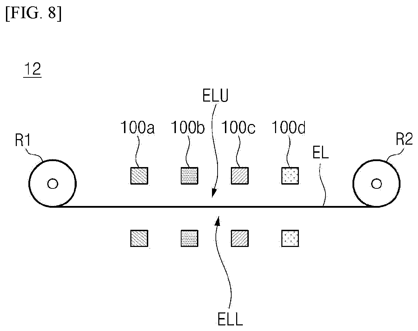

FIG. 8 is a diagram for describing an electrode drying apparatus 12 according to example embodiments.

Referring to FIG. 8, the electrode drying apparatus 12 may be configured to perform a drying process of an electrode EL. The electrode drying apparatus 12 may include first to fourth light emitting devices 100a, 100b, 100c, and 100d. The first to fourth light emitting devices 100a, 100b, 100c, and 100d may be arranged along a moving direction of an electrode EL.

According to example embodiments, each of the first to fourth light emitting devices 100a, 100b, 100c, and 100d may be one of the light emitting devices 100, 101, 102, 103, and 104 of FIGS. 2 to 6.

According to example embodiments, the first to fourth light emitting devices 100a, 100b, 100c, and 100d may be different from one another. For example, each of the first light emitting devices 100a may be the light emitting device 100 of FIG. 2, each of the second light emitting devices 100b may be the light emitting device 101 of FIG. 3, each of the third light emitting devices 100c may be the light emitting device 102 of FIG. 4, and each of the fourth light emitting devices 100d may be the light emitting device 103 of FIG. 5.

According to example embodiments, some of the first to fourth light emitting devices 100a, 100b, 100c, and 100d may be the same. For example, each of the first light emitting devices 100a may be the light emitting device 100 of FIG. 2, each of the second light emitting devices 100b may be the light emitting device 100 of FIG. 2, each of the third light emitting devices 100c may be the light emitting device 101 of FIG. 3, and each of the fourth light emitting devices 100d may be the light emitting device 102 of FIG. 4.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. An electrode drying apparatus comprising a plurality of light emitting devices arranged along a moving direction of an electrode that includes electrode plates and active materials, wherein each of the plurality of light emitting devices comprises:
a light source configured to generate light in an infrared band; and
a reflector configured to reflect the light generated from the light source,
wherein a reflective surface of the reflector is a parabolic surface.

2. The electrode drying apparatus of claim 1, wherein each of the plurality of light emitting devices is configured to emit parallel light.

3. The electrode drying apparatus of claim 1, wherein the light source is on a focal point on the parabolic surface.

4. An electrode drying apparatus comprising first and second light emitting devices arranged alternately along a moving direction of an electrode that includes electrode plates and active materials, wherein the first light emitting device comprises:
a first light source configured to generate first light in an infrared band; and
a first reflector configured to reflect the first light generated from the first light source,
the second light emitting device comprises:
a second light source configured to generate second light in an infrared band; and
a second reflector configured to reflect the second light generated from the second light source, and
a first reflective surface of the first reflector is different from a second reflective surface of the second reflector.

5. The electrode drying apparatus of claim 4, wherein the first reflective surface is a parabolic surface.

6. The electrode drying apparatus of claim 5, wherein the second reflective surface is a parabolic surface.

7. The electrode drying apparatus of claim 6, wherein a first focal length of the first reflective surface is less than a second focal length of the second reflective surface.

8. The electrode drying apparatus of claim 7, wherein the first light source is on a focal point on the first reflective surface, and
the second light source is on a focal point on the second reflective surface.

9. The electrode drying apparatus of claim 4, wherein the first light emitting device is configured to emit parallel light, and
the second light emitting device is configured to emit non-parallel light.

10. The electrode drying apparatus of claim 4, wherein the second light emitting device comprises
a third reflector configured to reflect the second light reflected by the second reflector.

11. The electrode drying apparatus of claim 10, wherein a third reflective surface of the third reflector is a parabolic surface.

12. The electrode drying apparatus of claim 10, wherein the second light source is on a focal point on the second reflective surface.

13. An electrode drying apparatus comprising first and second light emitting devices arranged alternately along a moving direction of an electrode that includes electrode plates and active materials, wherein the first light emitting device comprises:
a first light source configured to generate first light in an infrared band; and
a first reflector configured to reflect the first light generated from the first light source,
the second light emitting device comprises:
a second light source configured to generate second light in an infrared band; and
a second reflector configured to reflect the second light generated from the second light source, and
the first light emitting device is configured to emit parallel light, and the second light emitting device is configured to emit non-parallel light.

14. The electrode drying apparatus of claim 13, wherein the first reflector comprises a first reflective surface that is a parabolic surface,
the second reflector comprises a second reflective surface that is a parabolic surface, and
the first light source is spaced apart from a focal point on the first reflective surface.

15. The electrode drying apparatus of claim 14, wherein the second light source is on a focal point on the second reflective surface.
